# EUROPEAN PATENT SPECIFICATION

(11) **EP 0 461 325 B1**
(45) Date of publication and mention of the grant of the patent: **17.05.1995**
(21) Application number: 90402621.8
(22) Date of filing: 21.09.1990
(51) Int. Cl.: C08B 30/02, C12S 3/12

(54) **Wet milling process for ensiled corn**
Nassvermahlung von Silomais
Procédé de broyage humide pour le mais ensilé

(30) Priority: 11.06.1990 US 535665
(43) Date of publication of application: 18.12.1991
(73) Proprietor: PIONEER HI-BRED INTERNATIONAL, INC., Des Moines Iowa 50309 (US)
(72) Inventor: Tomes, Nancy Jane, Cummings, Iowa 50061 (US)
(74) Representative: Kedinger, Jean-Paul

(56) References cited:
- FR-A- 2 254 641
- FR-A- 2 542 013
- US-A- 4 842 871
- CEREAL CHEMISTRY, vol. 61, no. 1, 1984, pages 8-14, US; A. NERYNG et al.:"Laboratory wet milling of ensiled corn kernels"
- JOURNAL OF FOOD PROTECTION, vol. 48, no. 5, May 1985, pages 407-411, US; R.A.FLORES-GALARZA et al.: "Preservation of high-moisture corn by microbialfermentation"
- CEREAL CHEMISTRY, vol. 32, no. 5, 1955, pages 382-394, US; S.A. WATSON et al.:"A study of the lactic acid fermentation in commercial corn steeping"

## Description

### BACKGROUND OF THE INVENTION

Corn kernels have three main parts, the seed coat or pericarp, the starchy endosperm, and the embryo, commonly called the germ. The pericarp is the outer skin or hull of the kernel which serves to protect the seed. The endosperm, the main energy reserve, makes up about 80% of the total weight of the kernel. It is about 90% starch and 7% gluten (protein), with the remainder consisting of small amounts of oil, minerals and some trace constituents. The embryo contains a miniature plant made up of a root-like portion and five or six embryonic leaves. In addition, there are present large quantities of high energy oil to feed the tiny plant when it starts to grow, as well as many substances required during germination and early development.

In the corn wet milling process, the kernel is separated into its component parts, and those parts are then further subdivided and refined.

Typically, the wet miller buys shelled, dried corn which is delivered to his plant by truck, barge or rail car. The first step in the process is to clean the grain to remove extraneous material such as pieces of cob, foreign seeds, fine dirt, and other light unwanted material.

The cleaned corn is transported to large tanks called steeps. Warm water (125°-130°F ; about 52-54°C) usually containing small quantities of dissolved sulfur dioxide is circulated through the steeps for 24 to 48 hours. The dilute sulfurous acid formed by interaction of the sulfur dioxide and water controls fermentation and assists in separation of the starch and protein. During steeping the soluble components are extracted from the intact kernel. At the conclusion of steeping, the water is drained from the kernels and concentrated in multiple effect evaporators to yield concentrated steepwater. This protein-rich extract may be used as a nutrient for microorganisms in the production of enzymes, antibiotics and other determination products. The major portion, however, is combined with fiber and gluten in the production of animal feed ingredients.

The softened corn kernels next pass through attrition mills to break them up, loosen the hull and free the germ from the endosperm. Water is added to the attrition mills and a thick slurry of macerated kernels and whole germ results. Because the germ at this stage contains 40-50% oil it is lighter than the endosperm and hull. Centrifugal force is therefore used to isolate the germ.

The clean, separated germ is then dried and the crude oil is removed by mechanical presses and/or solvent extraction. The crude oil is refined to yield a fine quality salad and cooking oil or a raw material for the preparation of corn oil margarines. The extracted germ meal is often used in animal feed.

The remaining mixture of hull and endosperm then passes through a series of grinding and screening operations. The hull particles are removed on screens, while the finer particles of protein and starch pass through. All of the hull is used as a constituent in animal feed.

The water slurry of starch and gluten is separated by centrifugation. Because starch and gluten differ in density, almost complete separation is obtained. Typical operations yield a gluten stream containing over 60% protein, while the starch stream is over 99% starch. The gluten is dried and sold as gluten meal (60% protein) or it may be used as an ingredient in corn gluten feed (21% protein).

The white, nearly-pure cornstarch slurry is further washed to remove small quantities of solubles, dewatered using filters or centrifuges, and dried to produce common cornstarch.

In the typical wet milling process as described, the corn delivered to the wet miller is dried corn. The corn, of course, can be field dried but most often is bin dried, usually using propane gas burners. This drying takes the grain moisture down to a content of about 15-17% which is normally required for sale to a grain elevator.

While hot air burner drying is almost the universal practice, it has some problems, particularly with grain which ultimately will be used for wet milling. One of those problems is reported in Brown et al., "Note on the Suitability for Wet Milling of Corn Exposed to High Drying Temperatures At Different Moisture Contents", Cereal Chemistry, 58(1):75-76 (1981). There, it is reported that corn exposed to high drying temperatures often has some heat damage which makes separation of the protein from cornstarch more difficult. As a result, the cornstarch from the process is contaminated with some levels of protein.

Recently, there have been some reports in the literature of laboratory wet milling of ensiled corn, see Nerying et al., Cereal Chemistry, 61(1):8-14. In the Nerying article, there is a report of a recovery of uncontaminated starch after wet milling as being appreciably higher with use of ensiled corn. However, recent trials to achieve similar advantages of wet milling by simple use of ensiled corn have not proved particularly advantageous. In particular, no significant increases in starch purity or corresponding decreases in protein content of the starch have been observed.

Journal of Food Protection, vol. 48, No 5, page 407-411 (May 1985) teaches to add microorganisms (Lactobacillus plantarum and/or Propionibacterium Shermanii) to ensiling corn for purposes of preservation and reduction of mold growth.

It goes without saying that forced hot air corn drying is an expensive energy-consuming process. In addition to energy consumption, corn drying also may cause the detrimental effect of heat degradation as earlier described, i.e. the yield of high purity starch is decreased. In sum, heating has two primary negative effects, i.e. it is not cost effective, particularly for grain which will be subsequently wet milled, and secondly it has an adverse effect on the ability to separate corn into a pure cornstarch product, substantially devoid of protein and fiber.

Accordingly, there is a continuing need for the development of processes which allow for wet milling of corn with a minimum of energy consumption and at the same time allow an increase in the efficiency of separation to achieve proper extraction and recovery of pure cornstarch.

This invention has as its primary objective the development of a wet milling process for corn, which avoids the use of a separate grain drying process. As a result, the energy used in grain drying is not needed. In addition there is another benefit of reducing steeping time, since the grain does not have to be rehydrated in a traditional steeping process. Thus, reduced steeping time also results in savings and energy costs to the wet milling plant.

In addition, the process of the present invention takes advantage of a discovery that wet milling of ensiled corn to achieve highly efficient separation of corn into its fiber fraction protein fraction and starch fraction can be achieved when the high moisture corn is inoculated with a nonpathogenic organism which enhances proteolysis. That is, during the ensiling process, the inoculum significantly enhances selective proteolysis, with the result being that the protein content of the starch is significantly reduced.

### SUMMARY OF THE INVENTION

The invention relates to an improved wet milling process, primarily for corn. In accordance with the process high moisture corn, usually within the moisture range of 22% to 35% is initially inoculated with a nonpathogenic organism which enhances selective proteolysis; the inoculated corn is ensiled, and thereafter it is subjected to wet milling processing.

### DETAILED DESCRIPTION OF THE INVENTION

In the practice of the present invention, the corn which is to be used for wet milling is high moisture corn that has not previously been dried. Such is easily obtained directly from the field at harvest time. In this process, there is no need for a separate grain drying process. In fact, the grain drying to achieve typical dried field corn moisture levels of 15-17% has been found to be detrimental. Thus, in the present invention the corn harvested from the field is natural high moisture corn, typically having a moisture content within the range of 22% to 35% by weight. The preferred moisture range is 22% to 25%, and most satisfactory results today have been achieved with corn at about a 25% by weight moisture content.

This high moisture corn is initially inoculated with a nonpathogenic organism which is capable of enhancing selective proteolysis in the anaerobic environment of ensiled corn. Typically, the amount of inoculating organism will be within the range of from 10³ to 10⁶ organisms per gram of grain, and preferably within the range of 10⁴ to 10⁵ organisms per gram of grain. The inoculation occurs at the time of ensiling.

As earlier stated, the organisms used in the process of the present invention can be any microorganism which is capable of enhancing selective proteolysis in the anaerobic environment of the ensiling process for corn. Generally, it has been found that the most preferred organisms which will thrive in the ensiled corn environment are those within the genus Lactobacillus. Certain specific species of Lactobacillus, namely Lactobacillus plantarum 286 and Lactobacillus plantarum 287 are most satisfactory. The strain Lactobacillus plantarum 286 (ATCC 53187) is patented in Hill, U.S. Patent 4,842,871. Lactobacillus plantarum strain 287 is publicly available for sale from Pioneer Hi-Bred International, Inc. of Des Moines, Iowa, and is on deposit at the American Type Culture Collection, ATCC No. 55058 . In one preferred embodiment, the Lactobacillus organisms, preferably of the species plantarum, are combined with Streptococcus faecium. The preferred Streptococcus faecium strains are strain 301 and strain 202, also publicly available for purchase from Pioneer Hi-Bred International, Inc. of Des Moines, Iowa. Strain 202 is described in U.S. Patent No. 4,743,454 and is deposited at Rockville, Maryland as ATCC No. 53519. Strain 301 is also deposited at the same location, ATCC No. 55059. These strains are available in a Pioneer corn preservative known as "1186". Preferably the strains are used in equal amounts to achieve the organisms density population within the range earlier described.

After the inoculation, the grain can be stored in an anaerobic container such as a silo easily for as long as a year prior to use for wet milling. Generally it will not be stored this long, and typical storage periods would be from 30 to 180 days.

When the ensiled corn is opened, fermentation will have occurred in the presence of the inoculum resulting in some proteolysis. As a result, this corn can then be used in the typical wet milling processes previously described herein to achieve highly successful wet milling and a corn starch product which is extremely pure, and has only low levels of adulterating protein present.

While the wet milling process is generally well-known, only a brief description need be given here. Generally the wet milling process involves soaking of the corn in hot water at 40°C to 50°C for from 24 to 48 hours to soften the paricarp of the grain and release the starch for further refining. The steeping process is then followed with attriting in order to loosen the hull and free the germ. Centrifugal separators are thereafter used to isolate the germ followed by corn oil extraction, screening of hulls and fibers with the resulting finer particles of protein and starch passing through the screens to provide a water slurry of starch and gluten which is separated by centrifugation, often in a hydroclone. For further details with regard to the use of wet milling processing in general as applied to corn, see a series of articles entitled "Wet Process Corn Milling" by Bartline as appeared in the American Miller describing this process, e.g., see American Miller, August 1940, pp. 40, 41 and 82; September 1940, pp. 46-48 and 58; October 1940, pp. 28 and 30; December 1940, pp. 25-28, 30 and 84 and 85; February 1941, pp. 32-34 and 89; March 1941, pp. 48, 50, 97 and 98; May 1941, pp. 34-46, 104 and 105; June 1941, pp. 38, 40, 98 and 99; August 1941, pp. 40, 42, 81 and 82; October 1941, pp. 46, 47 and 85; November 1941, pp. 32, 33 and 37; and December 1941, pp. 34, 47 and 86.

Other articles showing wet milling of corn and grain sorghum are Watson, et al., "Laboratory Steeping Procedures Used in a Wet Milling Research Program," Cereal Chem., Vol. 28 (1951), pp. 105-108, and Anderson, "A Pilot Plant for Wet Milling," Cereal Science Today (April 1957), pp. 78-80. Illustrative of patents disclosing the wet milling of corn are Lander, U.S. Patent No. 1,391,065; Sherman, U.S. Patent No. 1,554,301; Eckers, U.S. Patent No. 2,556,322; Newkirk et al., U.S. Patent No. 2,573,048; Dowie, U.S. Patent No. 3,029,169; Slotter et al., U.S. Patent No. 2,527,585; Burkhardt, U.S. Patent No. 251,827; and Willford, U.S. Patent No. 1,061,933.

The following example is offered to further illustrate but not limit the process of this invention and to demonstrate the unique effect of the inoculum in causing a decrease in the protein content of wet milled starch. It also shows that the inoculum causes an increase in proteolysis during the ensiling process thereby giving a higher quality, pure starch.

### EXAMPLE

Original corn was prepared by inoculating the corn having a 25% moisture content with a publicly available inoculum known as "Pioneer 1186." The strains in "Pioneer 1186" were equal levels of L. plantarum 286 (ATCC 53187), as described in U.S. Patent 4,842,871 and L. plantarum 287 in combination with Streptococcus faecium 301 and Streptococcus faecium 202 (ATCC 53519) as described in U.S. Patent 4,743,454. The inoculation rate was 10,000 organisms per gram of grain. This grain was stored in an anaerobic container for 1 year, and was then used for wet milling. The steeping and milling procedure used for the grain was as follows. Starch from the corn that was inoculated was steeped for either 24 or 48 hours. Each sample was steeped and milled, roughly following the procedure described in Anderson, R.A. 1963, Wet Milling Properties of Grains: Bench-Scale Study, Cereal Science Today, 8:190. Generally, the mixtures were held at 52°C with shaking hourly for the first half day or so, and less often thereafter. After steeping, the steep water was decanted and analyzed and excess liquid was removed from the corn by blotting. Samples of the corn were coarsely ground with a Janke and Kunkel type A10 blender and thereafter screened in turn with 40, 200 and 270 U.S. standard sieves. The fraction that was held by the first sieve was ground somewhat more finely twice more with mortar and pestle with extra added water, taking care not to break up germ and fiber particles, and was screened again with the first sieve. Material stopped by the 200 and 270 mesh sieves was washed with water to more completely separate starch, which passed through, from gluten which was held up. After settling, the starch was separated from the water by decanting.

The protein content of the starch of a control which had no organism inoculation was thereafter compared with the protein content of the treated ensiled corn. For the control after 24 hours the protein content was 0.74%. For the treated inoculum the protein content after 24 hours was 0.55%. This represented a reduction of 25%. After 48 hours, the content was higher at 0.78% for the treated ensiled corn, and 1.09% for the control. This is a reduction of 37%. The differences between the treated and the control was significant at P<.05 for both steeping times.

As can be seen, the differences between the treated and the control were significant. In this example, both treatments were milled at the same time. The original grain was harvested from the same field at the same time and treated within 24 hours.

In sum, the data demonstrates that wet milled corn inoculated with the nonpathogenic organisms specified herein provides a purer corn starch at significantly reduced energy costs. It therefore can be seen that the invention accomplishes at least all of its stated objectives.

## Claims

1. An improved wet milling process for corn, said method comprising :
- selecting high moisture corn which has not previously been dried and which has a moisture content within the range of from 22% to 35% by weight for use in a wet milling process ;
- inoculating said high moisture corn with from 10³ to 10⁶ organisms per gram of corn, said organisms being a non pathogenic organism which enhances selective proteolysis during the ensiling process ;
- ensiling the inoculated high moisture corn ; and therafter
- wet milling the corn to provide highly pure cornstarch with protein content of the cornstarch reduced by at least 25% in comparison with wet milled ensiled corn without inoculating organisms.

2. The process of claim 1 wherein the corn is high moisture corn having a moisture content within the range of from 22% to 25%.

3. The process of claim 1 wherein the corn is high moisture corn having a moisture content of 25%.

4. The process of claim 1 wherein the organism inoculum is within the range of from 10⁴ to 10⁵ organisms per gram of corn.

5. The process of claim 1 wherein said non pathogenic organisms are selected from the group consisting of Lactobacillus plantarum 286, Lactobacillus plantarum 287, Streptococcus faecium 301, and Streptococcus faecium 202.

## Patentansprüche

1. Verbessertes Naßvermahlungsverfahren für Mais, wobei das Verfahren umfaßt:
- Auswählen von Mais mit hohem Feuchtigkeitsgehalt, welcher zuvor nicht getrocknet worden ist und einen Feuchtigkeitsgehalt im Bereich von 22 Gew.-% bis 35 Gew.-% hat, zur Verwendung in einem Naßvermahlungsverfahren;
- Beimpfen des Maises mit hohem Feuchtigkeitsgehalt mit 10³ bis 10⁶ Organismen pro Gramm Mais, wobei die Organismen ein nichtpathogener Organismus sind, welcher die selektive Proteolyse während des Silierverfahrens steigert;
- Silieren des beimpften Maises mit hohem Feuchtigkeitsgehalt; und danach
- Naßvermahlung des Maises, um hochreine Maisstärke zu ergeben, deren Proteingehalt um mindestens 25% im Vergleich zu naßvermahlenem silierten Mais ohne Beimpfung mit Organismen verringert ist.

2. Verfahren nach Anspruch 1, worin der Mais ein Mais mit hohem Feuchtigkeitsgehalt ist, der einen Feuchtigkeitsgehalt im Bereich von 22% bis 25% hat.

3. Verfahren nach Anspruch 1, worin der Mais ein Mais mit hohem Feuchtigkeitsgehalt ist, der einen Feuchtigkeitsgehalt von 25% hat.

4. Verfahren nach Anspruch 1, worin das Organismen-Impfmaterial 10⁴ bis 10⁵ Organismen pro Gramm Mais umfaßt.

5. Verfahren nach Anspruch 1, worin die nichtpathogenen Organismen ausgewählt sind aus der Gruppe bestehend aus Lactobacillus plantarum 286, Lactobacillus plantarum 287, Streptococcus faecium 301 und Streptococcus faecium 202.

## Revendications

1. Procédé de broyage humide perfectionné pour le maïs, ledit procédé comprenant :
- la sélection d'un maïs à forte teneur en humidité qui n'a pas été séché préalablement et dont la teneur en humidité se situe dans la plage allant de 22% à 35% en poids, en vue de son utilisation dans un procédé de broyage humide;
- l'inoculation audit maïs à forte teneur en humidité de 10³ à 10⁶ organismes par gramme de maïs, lesdits organismes consistant en un organisme non pathogène qui renforce une protéolyse sélective pendant le procédé d'ensilage;
- l'ensilage du maïs à forte teneur en humidité soumis à l'inoculation; et puis
- le broyage humide du maïs pour obtenir un amidon de maïs très pur dont la teneur en protéines est réduite d'au moins 25% comparativement à du maïs ensilé broyé humide sans inoculation d'organismes.

2. Procédé selon la revendication 1, dans lequel le maïs est un maïs ayant une forte teneur en humidité qui se situe dans la plage allant de 22% à 25%.

3. Procédé selon la revendication 1, dans lequel le maïs est un maïs ayant une forte teneur en humidité de 25%.

4. Procédé selon la revendication 1, dans lequel l'inoculum d'organismes se situe dans la plage allant de 10⁴ à 10⁵ organismes par gramme de maïs.

5. Procédé selon la revendication 1, dans lequel lesdits organismes non pathogènes sont choisis dans le groupe comprenant le Lactobacillus plantarum 286, le Lactobacillus plantarum 287, le Streptococcus faecium 301, et le Streptococcus faecium 202.
